# EUROPEAN PATENT APPLICATION

(11) **EP 2 006 199 A2**
(43) Date of publication of application: **24.12.2008**
(21) Application number: 08005990.0
(22) Date of filing: 28.03.2008
(51) Int. Cl.: B62M 3/00

(54) **Crank arm assembly and related crank arm and element for transmitting torque from the crank arm to a bicycle chain**

(30) Priority: 19.06.2007 IT MI20071221
(71) Applicant: CAMPAGNOLO S.r.l., 36100 Vicenza (VI) (IT)
(72) Inventor: Meggiolan, Mario, 36051 Creazzo (Vicenza) (IT)
(74) Representative: Castiglia, Paolo

(57) **Abstract**

A crank arm assembly (1) for a bicycle, comprising a crank arm (2) and an element (3,3a) for transferring torque from the crank arm (2) to a bicycle chain. The crank arm (2) and the element (3,3a) for transferring torque respectively comprise first (25) and second (34) front coupling means provided with respective matching profiles adapted to be coupled together to transfer torque from the crank arm (2) to the element (3,3a) for transferring torque. In particular, the first and second means for transferring torque comprise respective front toothings, preferably Hirth toothings.

## Description

The present invention relates to a crank arm assembly for a bicycle. The invention also relates to a crank arm for such an assembly and an element for transmitting torque from the aforementioned crank arm to a bicycle chain.

Throughout the present description and in the subsequent claims the term "crank arm assembly" is used to indicate an assembly comprising a crank arm and an element adapted to be associated with the crank arm to allow the transfer of motion to the rear wheel of the bicycle, such a motion being imparted by the cyclist on the crank arm through the pedals and being transferred to the rear wheel through the chain coupled with a crown of the crankset of the bicycle.

Right crank arm assemblies are known in which the crown is directly coupled with the right crank arm. See for example EP 1 354 792 and EP 0 414 907.

In such assemblies, the right crank arm is made star-shaped and comprises a plurality of coupling arms extending along respective substantially radial directions with respect to the rotation axis of the crank arm. Each coupling arm comprises, on one of its sides and at a free end thereof, a surface for coupling with the crown. The crown, in turn, comprises an annular element having, on a radially outer annular surface thereof, a toothing and, on a radially inner annular surface thereof, a plurality of elements for coupling with the crank arm. Each element for coupling with the crank arm, in particular, extends canti-levered from said radially inner annular surface along a substantially radial direction with respect to the rotation axis of the crown and comprises, on one of its sides and at a radially inner free end thereof, a surface for coupling with a respective arm of the crank arm. The coupling between crank arm and crown is carried out through a plurality of screws which are inserted into respective holes formed on the respective coupling surfaces of the arms of the crank arm and of the coupling elements of the crown.

An assembly of the type described above requires the use of cranks made from metallic material, and thus particularly heavy. Indeed, in such an assembly the transfer of motion from the crank arm to the crown takes place at limited and localised areas (in particular, at the areas in which the screws are provided), a high concentration of tension being generated in such areas. Moreover, the crank arm of such an assembly is particularly massive and bulky, having to provided on the crank arm the spokes for coupling with the crown. The use of metallic cranks, moreover, does not meet the continuous increasing need of bicycle manufacturers, above all racing bicycle manufacturers, to minimise the weight of bicycle components.

Right crank arm assemblies are also known in which the crown is coupled with the right crank arm through the interposition of a adapter disc. See for example EP 0 002 964 and EP 0 909 697.

In such assemblies, the transfer of motion from the crank arm to the adapter is made through coupling means that extend, in the crank arm, radially outwards and, in the adapter, radially inwards.

The Applicant observes that, in conventional crank arm assemblies provided for the use of an adapter, the provision on the crank arm of coupling means extending radially outwards necessarily requires such coupling means to be made at an annular portion of the crank arm of reduced diameter. Consequently, the overall coupling surface of the crank arm to the adapter is relatively small in size. This causes a high concentration of tension at the coupling between crank arm and adapter, with a consequent risk of breaking for the crank arm, especially if it is made from light material.

The technical problem at the basis of the present invention is to make a right crank arm assembly that is particularly light and structurally stronger than those currently known.

The present invention therefore relates, in a first aspect thereof, to a crank arm assembly for a bicycle, comprising a crank arm and an element for transferring torque from the crank arm to a bicycle chain, characterised in that said crank arm and said element for transferring torque comprise respective first and second front coupling means provided with respective matching profiles adapted to be coupled together to transfer said torque from the crank arm to said element for transferring torque.

In the context of the invention described here, the aforementioned element for transferring torque can consist of a crown of a bicycle crankset, or an adapter adapted to be operatively arranged between the crank arm and the crown for the attachment of the crank arm to the crown, such an adapter being a distinct element from the crown or made in a single piece with the crown.

Advantageously, the use of front coupling means in the crank arm and in the element for transferring torque to the chain of the bicycle allows the aforementioned coupling means to be made at an annular portion of the crank arm with a diameter larger than what is possible in conventional cranks provided for a radial coupling with the adapter. It is thus possible to provide an overall coupling surface of the crank arm with the element for transferring torque having an extension greater than in the conventional cranks, with greater uniformity of distribution of the load and a consequent reduction of concentration of tension.

Preferably, the first and second front coupling means comprise respective toothings, more preferably Hirth toothings.

Advantageously, the use of matching front toothings on the crank arm and on the element for transferring torque to the chain of the bicycle makes it possible to carry out homogeneous and uniformly distributed torque transmission, with consequent advantages in terms of efficiency of transmission of motion and of structural strength of the assembly. More preferably, the use of Hirth toothings allows, in particular, a high precision of centring in the coupling between crank arm and element for transferring torque, as well as a high efficiency of transmission of motion.

In the preferred embodiment of the crank arm assembly of the present invention, the crank arm comprises an elongated body having, at a first free end portion thereof, a first seat for coupling with a bicycle pedal and, at a second free end portion thereof, a second seat for coupling with a first free end of shaft of a bottom bracket assembly, the aforementioned first coupling means being defined on an annular portion of the aforementioned elongated body extending circumferentially about said second seat.

Preferably, the aforementioned first toothing is defined by a plurality of recesses formed in said elongated body on a surface not projecting canti-levered from said elongated body.

Advantageously, the front coupling means are thus made on the body of the crank arm with no need to provide shanks or portions projecting canti-levered from such a body. The crank arm of the crank arm assembly of the present invention thus has very low axial bulk, making it possible to provide an embodiment of a bottom bracket assembly in which the bearings are housed outside of the housing box of the shaft of such an assembly provided in the frame of the bicycle. Such an embodiment is particularly advantageous and preferred since, being the bearings very close to the respective crank arms, the bending torque applied to the shaft through pedalling is of reduced magnitude.

In a first embodiment of the crank arm assembly of the present invention, the first front coupling means extend uniformly over said annular portion of the elongated body of the crank arm.

In an alternative embodiment of the crank arm assembly of the present invention, the first coupling means extend over said annular portion of the elongated body of the crank arm along at least two arcs of circumference of an angular size less than 180°, preferably along three arcs of circumference.

Preferably, as well as through the aforementioned first and second coupling means, the crank arm is coupled with the aforementioned element for transferring torque through a plurality of screws.

In the preferred embodiment of the crank arm assembly of the present invention, the crank arm and the aforementioned element for transferring torque comprise in such a case respectively a plurality of first and second holes for reciprocally coupling through said screws.

Preferably, said first holes are through holes and are formed on said annular portion of the elongated body of crank arm.

In a first embodiment of the crank arm assembly of the present invention, and in particular in the embodiment in which the first coupling means extend along said annular portion of the elongated body of the crank arm for arcs of circumference of an angular size less than 180°, said first holes are formed between two successive arcs of circumference.

In an alternative embodiment, and in particular in the embodiment in which the coupling means of the crank arm extend uniformly along said annular portion of the elongated body of the crank arm, said first holes are integrated into the aforementioned first coupling means.

Irrespective of the specific embodiment of the assembly of the present invention, the provision, at the first coupling means, of holes for coupling through screws with the element for transferring torque allows a particularly stable coupling between crank arm and element for transferring torque to be made, i.e. without undesired relative displacements between crank arm (to which the driving torque is applied through pedalling) and element for transferring torque (subject to a resistant torque applied by the chain through the crown). Moreover, advantageously, since the screws that insert into the aforementioned holes have very low axial bulk, it is possible to make the embodiment of the bottom bracket assembly in which the bearings are housed outside of the housing box provided in the bicycle frame.

In an alternative embodiment of the crank arm assembly of the present invention, at least some of the aforementioned first holes are formed on a portion of the aforementioned elongated body radially inside or outside the annular portion on which the first front coupling means are formed. In a further alternative embodiment of the crank arm assembly of the present invention, the crank arm assembly comprises, instead of the aforementioned screws, a ring nut adapted to operate in abutment onto the element for transferring torque on the opposite side to said second coupling means, such a ring nut being provided with an inner threading for coupling with a threaded end of a shaft of a bottom bracket assembly.

The aforementioned second seat preferably comprises an inner threading, but alternatively it can comprise a grooved inner profile or an inner profile with square faces.

Preferably, the crank arm is made from a light metal alloy or composite material, preferably carbon fibre.

In the case in which the crank arm is made from composite material, the aforementioned first coupling means can be formed on an insert, made from metallic material, incorporated in the crank arm.

Preferably, the aforementioned element for transferring torque comprises a first radially inner annular element, a second radially outer annular element concentric to the first annular element and a plurality of arms extending radially between the first annular element and the second annular element, wherein the second coupling means are defined on the first annular element.

As already stated above, the element for transferring torque can consist of a crown of a bicycle crankset, or an adapter intended to be operatively arranged between the crank arm and the crown of the crankset for transferring torque from the crank arm to the crown. The adapter can be made in a single piece with the crown or be made in a distinct piece from the crown.

In the case in which an adapter is used, the front coupling means are made on the adapter.

Advantageously, the use of an adapter in the coupling between crank arm and crown makes it possible to use cranks that are less bulky and massive than those used in conventional assemblies in which the crank arm is directly coupled with the crown. Moreover, the crank arm, not being arranged to be coupled directly with the crown through screws, can be made from light material. The adapter can also be made from light material, in such a case achieving a substantial reduction in weight of the assembly, for the same structural strength.

In a first embodiment of the crank arm assembly of the present invention, the second coupling means extend uniformly along the first annular element.

In an alternative embodiment of the crank arm assembly of the present invention, the second coupling means extend over the first annular element along at least two arcs of circumference of an angular size less than 180°, preferably along three arcs of circumference.

Preferably, the aforementioned second holes are threaded and are formed on the first annular element, more preferably between two successive arcs of circumference.

Alternatively, the aforementioned second holes can be integrated into the second coupling means.

Alternatively, at least some of the aforementioned holes are formed on a portion of the element for transferring torque radially inside or outside the first annular element.

Preferably, in the case in which an adapter is used, the adapter is made from a light metal alloy or composite material, preferably carbon fibre.

More preferably, in the case in which an adapter made from composite material is used, the aforementioned coupling means can be formed on a metallic insert incorporated in said adapter.

Preferably, the crank arm assembly of the present invention comprises at least one deformation sensor, more preferably a strain gauge, associated with at least one of the arms of the element for transferring torque. Advantageously, such a sensor detects the twisting deformation to which the element for transferring torque is subjected during pedalling. Indeed, during pedalling the radially inner annular element, being coupled with the crank arm, is subjected to the driving torque applied by the cyclist by pedalling whereas the radially outer annular element, being coupled with the chain, is subjected to the resistant torque exerted by the chain. The twisting deformation of the element for transferring torque can provide indications on the structural strength of such an element and on the power imparted by the cyclist, such information being useful both at the design stage of the components of the crank arm assembly of the bicycle and during diagnosis of the behaviour of such components during travel.

Preferably, the crank arm assembly of the present invention comprises four deformation sensors, each of which is associated with a respective arm. It is possible in this way to carry out a more uniform and reliable detection of the deformations to which the element for transferring torque is subjected.

Preferably, said sensors are connected as a Wheatstone bridge.

Preferably, the crank arm assembly of the present invention comprises at least one electronic device housed in at least one area defined between two adjacent arms.

The crank arm assembly of the present invention also preferably comprises a pair of covers adapted to couple with the aforementioned element for transferring torque on axially opposite sides at the aforementioned second annular element.

Preferably, at least one of said covers is a solar panel.

In a second aspect thereof, the present invention relates to a crank arm for a bicycle, comprising an elongated body having, at a first free end portion thereof, a first seat for coupling with a bicycle pedal and, at a second free end portion thereof, a second seat for coupling with a first free end of a shaft of a bottom bracket assembly, characterised in that it comprises, at an annular portion of said elongated body extending circumferentially about said second seat, front coupling means.

Advantageously, such a crank arm can be used in an assembly of the type described above.

Preferably, such a crank arm has, individually or in combination, all of the structural and functional characteristics discussed above with reference to the crank arm of the crank arm assembly of the present invention and therefore has all of the aforementioned advantages.

In particular, the front coupling means preferably comprise a toothing, more preferably a Hirth toothing.

Preferably, said toothing is defined by a plurality of recesses formed in the elongated body of the crank arm on a surface not projecting canti-levered from said elongated body.

In a first embodiment of the crank arm of the present invention, the front coupling means extend uniformly along said annular portion of the elongated body of the crank arm.

In an alternative embodiment of the crank arm of the present invention, the coupling means extend over said annular portion of the elongated body of the crank arm along at least two arcs of circumference of an angular size less than 180°, preferably along three arcs of circumference.

Preferably, the crank arm of the present invention comprises a plurality of holes formed on said annular portion of the elongated body of the crank arm.

Preferably, said holes are through holes and more preferably are formed between two successive arcs of circumference.

Alternatively, the aforementioned holes are integrated in the aforementioned second coupling means.

Alternatively, at least some of the aforementioned holes are formed on a portion of said elongated body radially inside or outside said annular portion of the elongated body of the crank arm.

Preferably, the aforementioned second seat comprises an inner threading, but alternatively it can comprise a grooved inner profile or an inner profile with square faces.

Preferably, the elongated body is made from a light metal alloy or composite material, more preferably carbon fibre.

In the case in which the elongated body of the crank arm is made from composite material, the crank arm can comprise an insert made from metallic material in which the aforementioned front coupling means are formed.

In a third aspect thereof, the present invention relates to an element for transferring torque from a crank arm to a bicycle chain, characterised in that it comprises a first radially inner annular element, a second radially outer annular element concentric to the first annular element and a plurality of arms extending radially between the first annular element and the second annular element, front coupling means with said crank arm being defined on said first annular element.

Advantageously, such an element can be used in an assembly of the type described above.

Preferably, such an element has, individually or in combination, all of the structural and functional characteristics discussed above with reference to the element for transferring torque of the crank arm assembly of the present invention and therefore has all of the aforementioned advantages.

In particular, the aforementioned element can consist of a crown of a crankset for a bicycle or, alternatively, an adapter made in a distinct piece from the aforementioned crown and adapted to be operatively arranged between the crank arm and the crown of a crankset for a bicycle, the aforementioned front coupling means being formed in such a case on said adapter.

The coupling means with the crank arm preferably comprise a toothing, more preferably a Hirth toothing.

In a first embodiment of the adapter of the present invention, the coupling means with the crank arm extend uniformly along the first annular element.

In an alternative embodiment of the adapter of the present invention, the coupling means with the crank arm extend over the first annular element along at least two arcs of circumference of an angular size less than 180°, preferably along three arcs of circumference.

Preferably, the element for transferring torque of the present invention comprises a plurality of threaded holes for coupling with the crank arm formed on the first annular element.

Preferably, said holes are formed between two successive arcs of circumference.

Alternatively, they are integrated in the coupling means with the crank arm.

Alternatively, at least some of said holes are formed on a portion of said element radially inside or outside said first annular element.

Preferably, in the case in which an adapter is used, the adapter is made from a light metal alloy or composite material, preferably carbon fibre.

More preferably, in the case in which an adapter made from composite material is used, the aforementioned coupling means can be formed on a metallic insert incorporated in said adapter.

In the preferred embodiment thereof, the element for transferring torque of the present invention comprises a deformation sensor, preferably a strain gauge, associated with at least one of its arms.

More preferably, there are four sensors, each of which is associated with a respective arm.

Said sensors are preferably connected like a Wheatstone bridge.

Preferably, the element for transferring torque of the present invention comprises at least one electronic device housed in at least one area defined between two adjacent arms.

The element for transferring torque of the present invention also preferably comprises a pair of covers adapted to couple with the aforementioned element for transferring torque on axially opposite sides at the aforementioned second annular element.

Preferably, at least one of said covers is a solar panel.

In a fourth aspect thereof, the invention relates to a bottom bracket assembly for a bicycle, comprising a crank arm assembly of the type described above.

Preferably, such a bottom bracket assembly has, individually or in combination, all of the structural and functional characteristics discussed above with reference to the crank arm assembly of the present invention and therefore has all of the aforementioned advantages.

In a fifth aspect thereof, the invention relates to a bicycle comprising a crank arm assembly of the type described above.

Preferably, such a bicycle has, individually or in combination, all of the structural and functional characteristics discussed above with reference to the crank arm assembly of the present invention and therefore has all of the aforementioned advantages.

Further characteristics and advantages of the present invention shall become clearer from the following detailed description of some preferred embodiments thereof, made with reference to the attached drawings. In such drawings:
- figure 1 is an exploded perspective view of a first embodiment of the crank arm assembly of the present invention, wherein the element indicated with reference numeral 3 has been overturned to make some features of the present invention visible;
- figure 2 is a perspective view of the crank arm of the crank arm assembly of figure 1 from a first point of observation;
- figure 3 is a front view of a portion of the crank arm of the crank arm assembly of figure 1 from an opposite point of observation to that of figure 2;
   figure 4 is a view from above of the crank arm of the crank arm assembly of figure 1;
- figure 5 is a longitudinal section of a bottom bracket assembly comprising the crank arm assembly of figure 1;
- figure 6 is a longitudinal section of a second embodiment of the crank arm assembly of the present invention;
- figure 7 is an exploded perspective view of a third embodiment of the crank arm assembly of the present invention, wherein the element indicated with reference numeral 3 has been overturned to make some features of the present invention visible;
- figure 8 is a front view of a portion of a further embodiment of the crank arm of the crank arm assembly of the present invention.

In the figures attached hereto, reference numeral 1 indicates a crank arm assembly in accordance with the present invention. The crank arm assembly 1 is, in particular, a right crank arm assembly and is intended to be used in a bottom bracket assembly of a bicycle, preferably a racing bicycle, to transfer motion from the crank arm to the chain of a bicycle through a crown of a bicycle crankset.

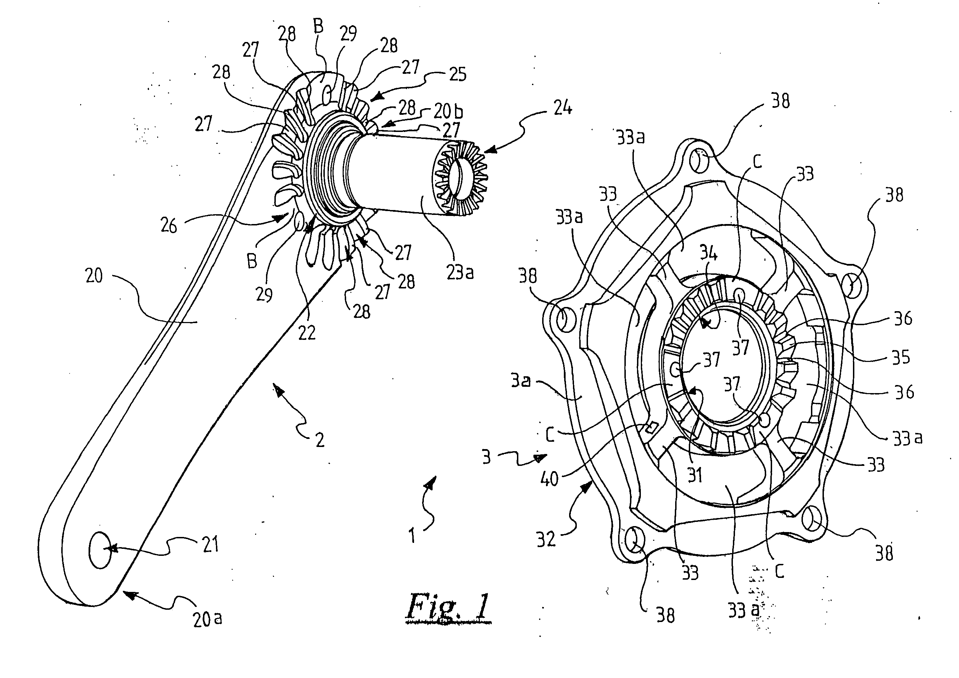

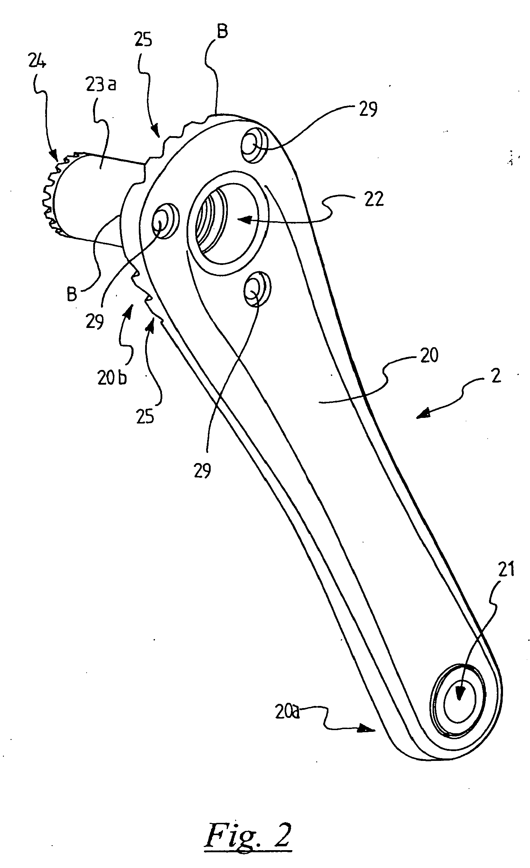

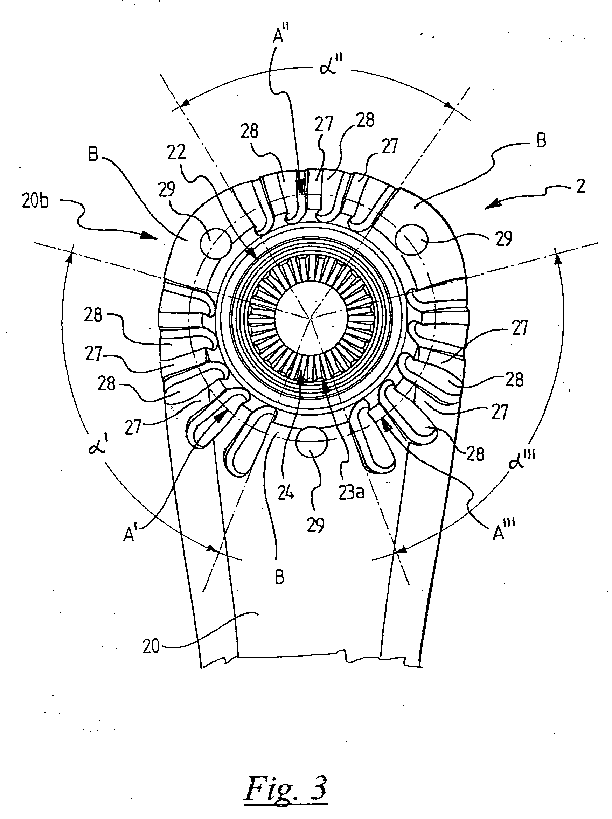

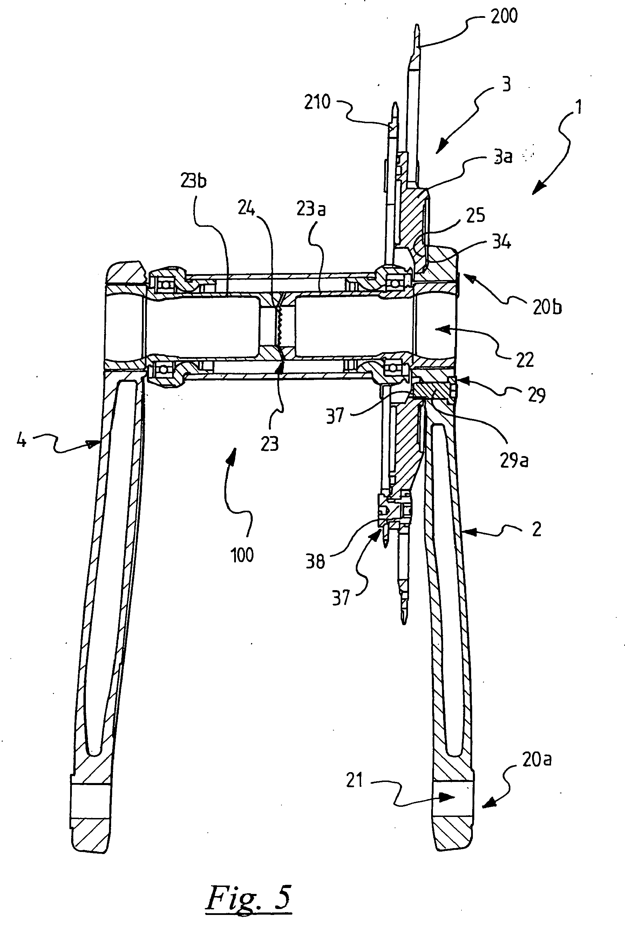

Figure 1 shows a first embodiment of the crank arm assembly of the present invention. The crank arm of such a crank arm assembly is illustrated in detail in figures 2-4, whereas figure 5 illustrates a bottom bracket assembly that uses the crank arm assembly of figure 1.

With reference to the aforementioned figures 1-5, the crank arm assembly 1 comprises a crank arm 2, adapted to act as a right crank arm, and an adapter 3a adapted to be coupled with the crank arm 2 and with the crown (indicated with 200 in figure 5), so as to allow the transfer of torque from the crank arm 2 to the rear wheel of the bicycle (not illustrated). Such motion is imparted to the crank arm 2 through pedalling and is transferred to the rear wheel through the chain (not illustrated) coupled with the crown 200.

The crank arm 2 comprises an elongated body 20, preferably made from a light metal alloy, like aluminium alloys or other light alloys, or from composite material.

The composite material can in this case comprise structural fibres incorporated in a polymeric material. Typically, the structural fibres are selected from the group consisting of carbon fibres, glass fibres, aramid fibres, ceramic fibres, boron fibres and combinations thereof. Carbon fibres are particularly preferred.

The arrangement of said structural fibres in the polymeric material can be a random arrangement of pieces or sheets of structural fibres, a substantially unidirectional ordered arrangement of fibres, a substantially bi-directional ordered arrangement of fibres or a combination of the above.

Preferably, the polymeric material is thermosetting and preferably comprises an epoxy resin. However, this does not rule out the possibility of using a thermoplastic material.

The elongated body 20 has, at a first free end portion 20a thereof, a seat 21 for coupling with a bicycle pedal and, at a second free end portion 20b thereof, a seat 22 for coupling with a shaft 23 of a bottom bracket assembly 100 (see in particular figure 2 and figure 5).

In the example illustrated in figures 1-5, the seat 22 is internally threaded and houses a shaft element 23a, provided with an external threading at a free end thereof for coupling with the crank arm 2. However, alternative embodiments are provided in which the crank arm 2 is coupled with the half-shaft 23a through a grooved coupling (in which case the seat 22 and the free end of the shaft element 23a adapted to be housed in the seat 22 have respective grooved profiles), or a shape coupling through matching surfaces (for example through respective profiles with square faces). Alternatively, the shaft element 23a can be made in a single piece with the crank arm 2.

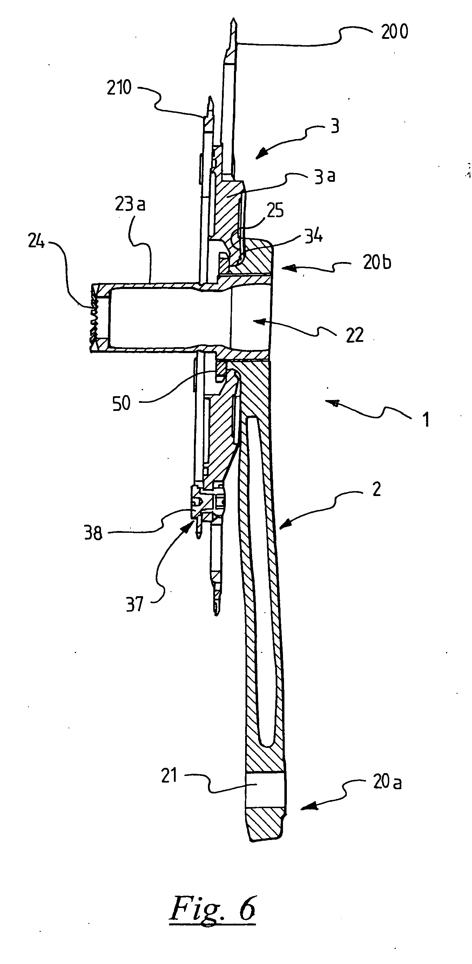

In the present description and the subsequent claim, the term "shaft element" is used to indicate one of the portions of which the shaft of the bottom bracket assembly can consist. The shaft 23 of the bottom bracket assembly in this case is thus made in a distinct piece from the crank arm 2 and consists of at least two shaft elements 23 (in the example illustrated in figure 6 the shaft elements 23a and 23b). Alternatively, the shaft 23 of the bottom bracket assembly can be made in a single piece.

The shaft element 23a has, at a free end thereof arranged on the opposite side to the crank arm 2, a front toothing 24, preferably a Hirth toothing, for coupling with the shaft element 23b associated with the other crank arm 4 of the bottom bracket assembly, as illustrated and described in patent applications EP 05026302 and 05026315 to the same Applicant, the content of which is incorporated here by reference.

The crank arm 2 comprises, at the free end portion 20b thereof, a front toothing 25, preferably also the Hirth-type. Such a toothing 25, in particular, is formed on an annular portion 26 of the crank arm 2 extending circumferentially about the seat 22.

The toothing 25 is dug into the elongated body 20 of the crank arm 2. Consequently, the annular portion 26 on which the toothing 25 is formed does not project canti-levered from the remaining portion of the elongated body 20 of the crank arm 2.

The front toothing 25, in particular, is defined by a plurality of teeth 27 identical to one another (only some of which have been numbered in figures 1-4), defined between respective throats 28, which are also identical to one another (only some of which have been numbered in figures 1-4).

The number of teeth 27 is preferably between 2 and 40, more preferably between 10 and 30. In the illustrated example, the number of teeth 27 is equal to 11.

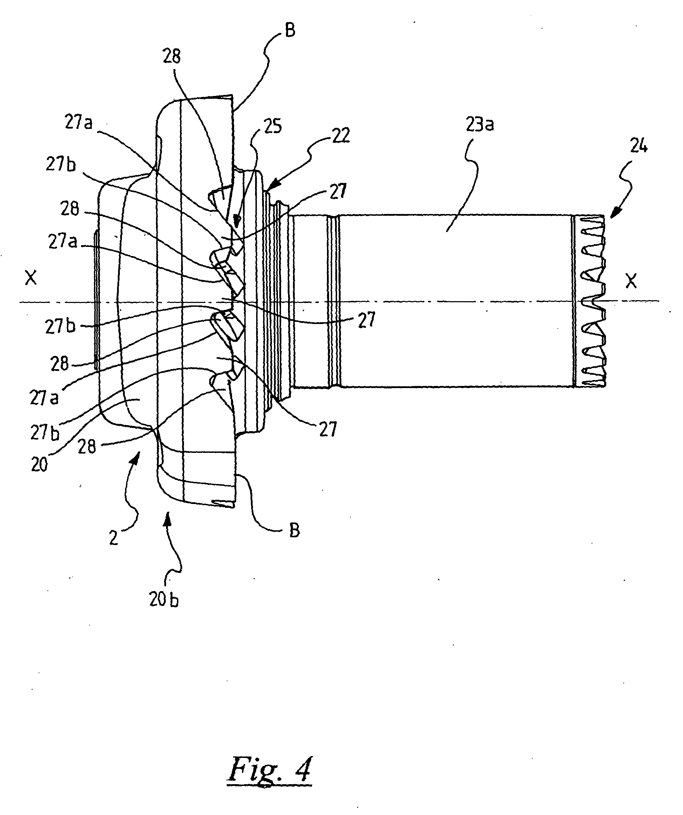

The teeth 27 are asymmetrical with respect to a respective direction parallel to the rotation axis X-X of the crank arm 2. In particular, as illustrated in figure 4, the teeth 27 have a side 27a that is more inclined than the opposite side 27b with respect to the aforementioned direction parallel to the axis X-X.

In the embodiment of the crank arm 2 illustrated in figures 1-5, the teeth 27 of the front toothing 25 are distributed over the annular portion 26 of the crank arm 2 along three arcs of circumference A', A" and A"', of an angular size respectively equal to α', α'' and α''', areas B without teeth and throats being defined between the aforementioned arcs.

Preferably, the angles α' and α''' are the same as one another and are greater than the angle α''. In the illustrated example, at the arcs of circumference A' and A''' four teeth 27 are defined between five throats 28, whereas at the arc of circumference A'' three teeth 27 are defined between four throats 28.

Preferably, the angles α', α'' and α''' are between about 30° and about 120°.

As illustrated in figures 1, 2 and 3, in each of the areas B defined between two successive arcs of circumference A through holes 29 are formed. Such holes 29 are intended to receive screws 29a (one of which can be seen in figure 5) to further couple the crank arm 2 with the adapter 3a.

In an embodiment of the crank arm 2 that has not been illustrated, the teeth 27 are distributed over the annular portion 26 of the crank arm 2 uniformly over 360°. In such an embodiment, therefore, the whole annular portion 26 of the crank arm 2 comprises teeth 27 and throats 28 and there are no areas B without teeth 27 and throats 28. In this case, the holes 29 are integrated in the toothing 25, in the sense that they are made directly on the teeth 27 or on the throats 28 of such a toothing or such that a part of the hole 29 is on a tooth and another part of the hole 29 is on a throat 28.

Alternative embodiments of the crank arm 2 are provided in which at least some of the holes 29 can be made on a portion of the elongated body 20 of the crank arm 2 radially inside or outside the annular portion 26 in which the toothing 25 is defined.

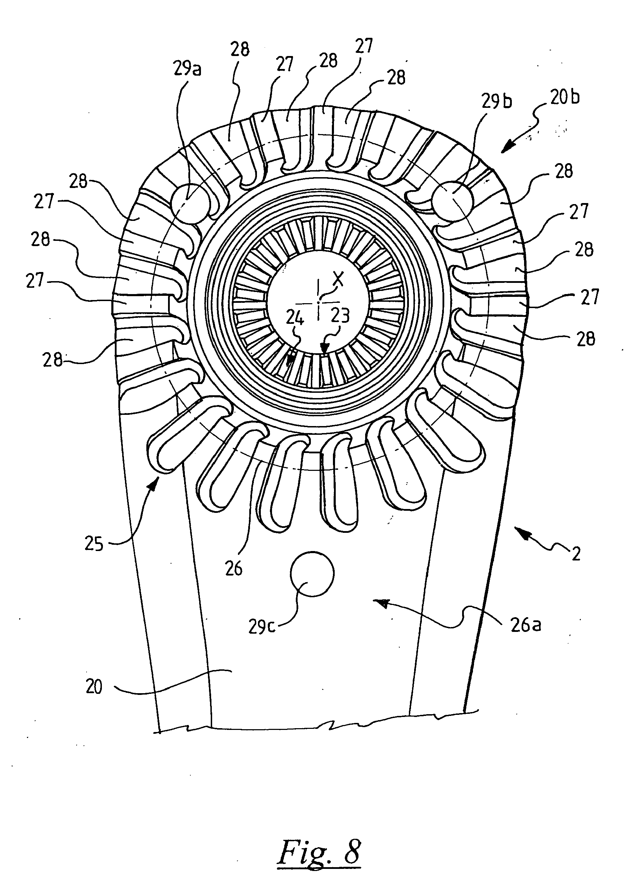

An alternative embodiment of the crank arm is illustrated in figure 8. In such a figure, elements corresponding to those described above with reference to figures 1-5 are indicated with the same reference numeral.

The crank arm 2 illustrated in figure 8 differs from the one described above and illustrated in figure 1-5 for the sole reason that the teeth 27 are uniformly distributed along the entire annular portion 26 (indicated with a dashed line) and the holes 29a and 29b are made in part on a tooth 27 and in part on a throat 28, whereas the hole 29c is made in a portion 26a of the elongated body 20 of the crank arm 2 radially outside the annular portion 26 on which the toothing 25 is made.

The adapter 3a comprises a first radially inner annular element 31, a second radially outer annular element 32 concentric to the first annular element 31 and a plurality of arms 33 (in the specific example illustrated in figure 1, 4 arms) extending radially between the first annular element 31 and the second annular element 32.

On the first annular element 31 a toothing 34, preferably a Hirth toothing, is formed which matches the toothings 25 formed on the crank arm 2. The toothing 34 is indeed adapted to couple with the toothing 25 of the crank arm 2, as illustrated in figure 5, to allow the transmission of motion from the crank arm 2 to the crown 200 through the adapter 3a.

The toothing 34 thus comprises teeth 35 (just one of which is numbered in figure 1) and throats 36 (just two of which are numbered in figure 1) totally identical to the teeth 27 and throats 28 of the toothing 25 of the crank arm 2. The arrangement of the teeth 35 and of the throats 36 on the annular element 31 totally mirrors that of the teeth 27 and of the throats 28 on the annular portion 25 of the crank arm 2. In particular, the teeth 35 are distributed over the annular element 31 along three arcs of circumference of an angular size equal, respectively, to the size of the arcs of circumference A', A'', A''' defined in the annular portion 25 of the crank arm 2. Moreover, areas C without teeth and throats corresponding to the areas B defined in the annular portion 25 of the crank arm 2 are defined between the aforementioned arcs of circumference defined on the adapter 3a.

As illustrated in figure 1, threaded holes 38 are formed in each of the areas C. Such holes 38 are intended to receive the screws 29a passing through the holes 29 of the crank arm 2 (figure 5) to further couple crank arm 2 with the adapter 3a.

In an embodiment of the crank arm 2 that has not been illustrated, the teeth 35 are distributed over the annular element 31 uniformly, as described above with reference to an alternative embodiment of the crank arm 2. In such an embodiment, therefore, teeth 35 and throats 36 are distributed over the entire annular element 31 and there are no areas C without teeth 35 and throats 36. In this case, the holes 38 are integrated in the toothing 34, in the sense that they are made directly on a tooth 35 or on a throat 36 of such a toothing.

The adapter 3a is preferably made from metallic material, preferably a light metal alloy, or composite material, preferably carbon fibre, as described above with reference to the crank arm 2.

Preferably, a deformation sensor, more preferably a strain gauge (schematically indicated with 40 in figure 1) is associated on at least one of the arms 33 formed on the adapter 3a, so as to be able to detect the twisting deformation to which the adapter 3a is subjected during pedalling. Preferably, such a strain gauge is of the type described in patent application EP 0 386 005, the content of which is incorporated here for reference.

In the preferred embodiment, there are four strain gauges 40, one for each arm 33 and they are connected according to a Wheatstone bridge scheme.

Electronic devices (not illustrated) for processing the signals detected by the strain gauges 40 are housed in the areas 33a defined between two adjacent arms 33. Figure 6 shows an alternative embodiment of the crank arm assembly 1 of the present invention. In such a figure, elements corresponding to those described above with reference to figures 1-5 are indicated with the same reference numeral.

The crank arm assembly of figure 6 differs from the crank arm assembly 1 of figures 1-5 for the sole reason that on the crank arm 2 and on the adapter 3a holes for reciprocally coupling through screws are not formed. Such reciprocal coupling, as well as through the toothings 25 and 34, is indeed achieved through a ring nut 50 adapted to operate in abutment on the adapter 3a on the opposite side to the toothing 34. For this purpose, the ring nut 50 is provided with an inner threading for coupling with a threaded end of the shaft element 23a inserted into the seat 22 of the crank arm 2.

Figures 5 and 6 also illustrate a second crown 210 with a smaller diameter than that of the first crown 200, also associated with the adapter 3a.

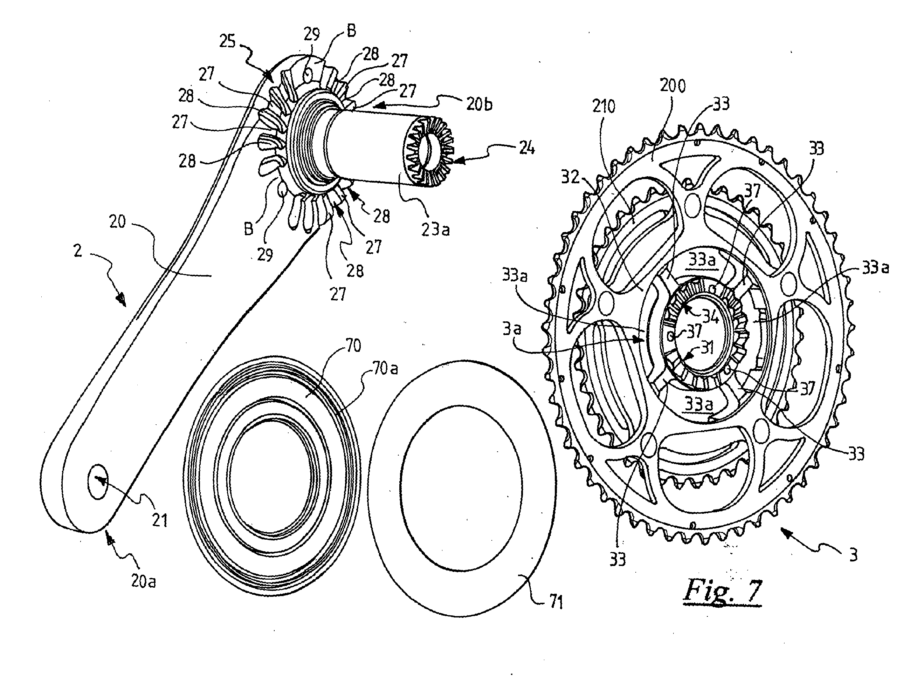

Figure 7 shows an alternative embodiment of the crank arm assembly 1 of the present invention. In such a figure, elements corresponding to those described above with reference to figures 1-5 are indicated with the same reference numeral.

The crank arm assembly of figure 7 differs from the crank arm assembly 1 of figures 1-5 for the sole reason that the adapter 3a here is made in a single piece with the crown 200. In other words, the adapter 3a is defined on a radially inner portion of the crown 200. In this embodiment, therefore, the element 3 that transfers torque from the crank arm 2 to the chain consists of the assembly consisting of the crown 200 and the adapter 3a.

In figure 7 two covers 70 and 71 are illustrated adapted to couple with the crown 200 on axially opposite sides at the radially inner portion thereof in which the adapter 3a is defined. Said covers 70 and 71 close the spaces 33a in which the aforementioned electronic devices are inserted. At least one of the two covers 70, 71 consists of a solar panel for feeding such electronic devices and sensors 40. The cover 70 is also provided with sealing gaskets 70a.

A further embodiment of the present invention is provided in which the toothing 34 is made directly on the crown 200 and no adapter 3a is used. In this embodiment, therefore, the element 3 that transfers torque from the crank arm 2 to the chain consists of just the crown 200.

In all of the embodiments described above, in the case in which the crank arm 2 and the adapter 3 are made from a composite material, it is possible to provide inserts made from metallic material on which the toothings 25 and 34 are formed.

## Claims

1. Crank arm assembly (1) for a bicycle, comprising a crank arm (2) and an element (3,3a) for transferring torque from the crank arm (2) to a bicycle chain, **characterised in that** said crank arm (2) and said element (3,3a) for transferring torque comprise respective first and second front coupling means (25,34) provided with respective matching profiles adapted to be reciprocally coupled to transfer said torque from the crank arm (2) to said element (3,3a) for transferring torque.

2. Crank arm assembly (1) according to claim 1, wherein said first and second front coupling means comprise respectively a first (25) and a second (34) toothing.

3. Crank arm assembly (1) according to claim 2, wherein said toothings (25,34) are Hirth-type toothings.

4. Crank arm assembly (1) according to any one of the previous claims, wherein said crank arm (2) comprises an elongated body (20) having, at a first free end portion thereof (20a), a first seat (21) for coupling with a bicycle pedal and, at a second free end portion thereof (20b), a second seat (22) for coupling with a first free end of a shaft (23,23a) of a bottom bracket assembly (100), wherein said first coupling means (25) are defined on an annular portion (26) of said elongated body (20) extending circumferentially about said second seat (22).

5. Crank arm assembly (1) according to claim 4 when depending on claim 2 or 3, wherein said first toothing (25) is defined by a plurality of recesses formed in said elongated body (20) on a surface not projecting canti-levered from said elongated body (20).

6. Crank arm assembly (1) according to claim 4 or 5, wherein said first coupling means (25) extend uniformly along said annular portion (26) of said elongated body (20).

7. Crank arm assembly (1) according to claim 4 or 5, wherein said first coupling means (25) extend over said annular portion (26) of said elongated body (20) along at least two arcs of circumference (A',A'',A''') of an angular size (α) less than 180°.

8. Crank arm assembly (1) according to claim 7, wherein said first coupling means (25) extend over said annular portion (26) of said elongated body (20) along three arcs of circumference (A',A",A"').

9. Crank arm assembly (1) according to any one of the previous claims, wherein said crank arm (2) and said element (3,3a) for transferring torque respectively comprise a plurality of first (29) and second (37) holes for reciprocally coupling through screws.

10. Crank arm assembly (1) according to claim 9 when depending on claim 4, wherein said first holes (29) are formed on said annular portion (26) of said elongated body (20).

11. Crank arm assembly (1) according to claim 10, wherein said first holes (29) are through holes.

12. Crank arm assembly (1) according to any one of claims 9 to 11 when depending on claim 7 or 8, wherein said first holes (29) are formed between two successive arcs of circumference (A',A",A"').

13. Crank arm assembly (1) according to any one of claims 9 to 11 when depending on claim 6, wherein said first holes (29) are integrated into said first coupling means (25).

14. Crank arm assembly (1) according to any one of claims 9 to 11 when depending on claim 4, wherein at least some of said first holes (29) are formed on a portion (26a) of said elongated body (20) which is radially inside or outside said annular portion (26)

15. Crank arm assembly (1) according to any one of claims 1 to 8, comprising a ring nut (50) adapted to operate in abutment onto said adapter (3,3a) on the opposite side to said second coupling means (34), said ring nut (50) being provided with an inner threading for coupling with a threaded end of a shaft (23,23a) of a bottom bracket assembly (100).

16. Crank arm assembly (1) according to any one of claims 4 to 15, wherein said second seat (22) comprises an inner threading.

17. Crank arm assembly (1) according to any one of claims 4 to 15, wherein said second seat (22) comprises a grooved inner profile.

18. Crank arm assembly (1) according to any one of claims 4 to 15, wherein said second seat (22) comprises an inner profile with square faces.

19. Crank arm assembly (1) according to any one of the previous claims, wherein said crank arm (2) is made from a light metal alloy.

20. Crank arm assembly (1) according to any one of claims 1 to 15, wherein said crank arm (2) is made from composite material.

21. Crank arm assembly (1) according to claim 20, wherein said crank arm (2) is made from carbon fibre.

22. Crank arm assembly (1) according to claim 20 or 21, wherein said crank arm comprises an insert made from metallic material, said first coupling means (25) being formed in said insert.

23. Crank arm assembly (1) according to any one of the previous claims, wherein said element (3) for transferring torque comprises a crown (200) of a bicycle crankset.

24. Crank arm assembly (1) according to claim 23, wherein said element (3) for transferring torque comprises an adapter (3a) made in a piece distinct from said crown (200) and operatively arranged between said crank arm (2) and said crown (200), wherein said second front coupling means (34) are formed on said adapter (3a).

25. Crank arm assembly (1) according to any one of claims 23 to 25, wherein said element (3,3a) for transferring torque comprises a first radially inner annular element (31), a second radially outer annular element (32) concentric to said first annular element (31) and a plurality of arms (33) extending radially between said first annular element (31) and said second annular element (32), wherein said second coupling means (34) are defined on said first annular element (31).

26. Crank arm assembly (1) according to claim 25, wherein said second coupling means (34) extend uniformly along said first annular element (31).

27. Crank arm assembly (1) according to claim 25, wherein said second coupling means (34) extend over said first annular element (31) along at least two arcs of circumference of an angular size less than 180°.

28. Crank arm assembly (1) according to claim 27, wherein said second coupling means (34) extend over said first annular element (31) along three arcs of circumference.

29. Crank arm assembly (1) according to any one of claims 25 to 28 when depending on claim 9, wherein said second holes (37) are threaded and are formed on said first annular element (31).

30. Crank arm assembly (1) according to claim 29 when depending on claim 27 or 28, wherein said second holes (37) are formed between two successive arcs of circumference.

31. Crank arm assembly (1) according to claim 29 when depending on claim 26, wherein said second holes (37) are integrated in said second coupling means (34).

32. Crank arm assembly (1) according to claim 25 when depending on claim 9, wherein at least some of said second holes (37) are formed on a portion of said element (3,3a) for transferring torque which is radially inside or outside said first annular element (31).

33. Crank arm assembly (1) according to any one of claims 24 to 32, wherein said adapter (3a) is made from a light metal alloy.

34. Crank arm assembly (1) according to any one of claims 1 to 32, wherein said adapter (3a) is made from composite material.

35. Crank arm assembly (1) according to claim 34, wherein said adapter (3a) is made from carbon fibre.

36. Crank arm assembly (1) according to claim 33 or 34, wherein said adapter (3a) comprises an insert made from metallic material, said second coupling means (34) being formed in said insert.

37. Crank arm assembly (1) according to any one of claims 25 to 36, comprising at least one deformation sensor (40) associated with at least one of said arms (33).

38. Crank arm assembly (1) according to claim 37, wherein said at least one deformation sensor (40) is a strain gauge.

39. Crank arm assembly (1) according to claim 37 or 38, comprising four deformation sensors (40), each of which is associated with a respective arm (33).

40. Crank arm assembly (1) according to claim 39, wherein said sensors (40) are connected as a Wheatstone bridge.

41. Crank arm assembly (1) according to any one of claims 37 to 40, comprising at least one electronic device housed in at least one area (33a) defined between two adjacent arms (33).

42. Crank arm assembly (1) according to any one of claims 37 to 41, comprising a pair of covers (70,71) adapted to couple with said element (3,3a) for transferring torque on axially opposite sides at said second annular element (32).

43. Crank arm assembly (1) according to claim 42, wherein at least one of said covers (70,71) is a solar panel.

44. Crank arm (2) for a bicycle, comprising an elongated body (20) having, at a first free end portion thereof (20a), a first seat (21) for coupling with a bicycle pedal and, at a second free end portion thereof (20b), a second seat (22) for coupling with a first free end of a shaft (23,23a) of a bottom bracket assembly (100), **characterised in that** it comprises, at an annular portion (26) of said elongated body (20) extending circumferentially about said second seat (22), front coupling means (25).

45. Crank arm (2) according to claim 44, wherein said front coupling means comprise a toothing (25).

46. Crank arm (2) according to claim 45, wherein said toothing (25) is a Hirth-type toothing.

47. Crank arm (2) according to claim 45 or 46, wherein said toothing (25) is defined by a plurality of recesses formed in said elongated body (20) on a surface not projecting canti-levered from said elongated body (20).

48. Crank arm (2) according to any one of claims 45 to 47, wherein said front coupling means (25) extend uniformly along said annular portion (26) of said elongated body (20).

49. Crank arm (2) according to any one of claims 45 to 47, wherein said coupling means (25) extend over said annular portion (26) of said elongated body (20) along at least two arcs of circumference of an angular size less than 180°.

50. Crank arm (2) according to claim 49, wherein said coupling means (25) extend over said annular portion (26) of said elongated body (20) along three arcs of circumference.

51. Crank arm (2) according to any one of claims 45 to 50, comprising a plurality of holes (29) formed on said annular portion (26) of said elongated body (20).

52. Crank arm (2) according to claim 51, wherein said holes (29) are through holes.

53. Crank arm (2) according to claim 51 or 52 when depending on claim 49 or 50, wherein said holes (29) are formed between two successive arcs of circumference.

54. Crank arm (2) according to claim 51 or 52 when depending on claim 48, wherein said holes (29) are integrated in said coupling means (25).

55. Crank arm (2) according to claim 51 or 52, wherein at least some of said holes (29) are formed on a portion (26a) of said elongated body (20) which is radially inside or outside said annular portion (26).

56. Crank arm (2) according to any one of claims 44 to 55, wherein said second seat (22) comprises an inner threading.

57. Crank arm (2) according to any one of claims 44 to 55, wherein said second seat (22) comprises a grooved inner profile.

58. Crank arm (2) according to any one of claims 44 to 55, wherein said second seat (22) comprises an inner profile with square faces.

59. Crank arm (2) according to any one of claims 44 to 58, wherein said elongated body (20) is made from a light metal alloy.

60. Crank arm (2) according to any one of claims 44 to 58, wherein said elongated body (20) is made from composite material.

61. Crank arm (2) according to claim 60, wherein said elongated body (20) is made from carbon fibre.

62. Crank arm (1) according to claim 60 or 61, wherein said elongated body (20) comprises an insert made from metallic material, said first coupling means (25) being formed in said insert.

63. Element (3) for transferring torque from a crank arm (2) to a bicycle chain, **characterised in that** it comprises a first radially inner annular element (31), a second radially outer annular element (32) concentric to said first annular element (31) and a plurality of arms (33) extending radially between said first annular element (31) and said second annular element (32), front coupling means (34) with said crank arm (2) being defined on said first annular element (31).

64. Element (3,3a) according to claim 63, comprising a crown (200) of a bicycle crankset.

65. Element (3,3a) according to claim 64, comprising an adapter (3a) made in a piece distinct from said crown (200) and adapted to be operatively arranged between said crank arm (2) and a crown (200) of a bicycle crankset, wherein said front coupling means (34) are formed on said adapter (3a).

66. Element (3,3a) according to any one of claims 63 to 65, wherein said front coupling means comprise a toothing (34).

67. Element (3,3a) according to claim 66, wherein said toothing (34) is a Hirth-type toothing.

68. Element (3,3a) according to any one of claims 63 to 67, wherein said front coupling means (34) extend uniformly along said first annular element (31).

69. Element (3,3a) according to any one of claims 63 to 67, wherein said front coupling means (34) extend over said first annular element (31) along at least two arcs of circumference of an angular size less than 180°.

70. Element (3,3a) according to claim 69, wherein said front coupling means (34) extend over said first annular element (31) along three arcs of circumference.

71. Element (3,3a) according to any one of claims 65 to 70, comprising a plurality of threaded holes (37) for coupling with the crank arm (2), said holes (37) being formed on said first annular element (31).

72. Element (3,3a) according to claim 71 when depending on claim 69 or 70, wherein said holes (37) are formed between two successive arcs of circumference.

73. Element (3,3a) according to claim 71 when depending on claim 68, wherein said holes (37) are integrated in said front coupling means (34).

74. Element (3,3a) according to claim 71, wherein at least some of said holes (37) are formed on a portion of said element (3,3a) which is radially inside or outside said first annular element (31).

75. Element (3,3a) according to any one of claims 65 to 74, wherein said adapter (3a) is made from a light metal alloy.

76. Element (3,3a) according to any one of claims 65 to 74, wherein said adapter (3a) is made from composite material.

77. Element (3,3a) according to claim 76, wherein said adapter (3a) is made from carbon fibre.

78. Element (3,3a) according to claim 76 or 77, wherein said adapter (3a) comprises an insert made from metallic material, said coupling means (34) being formed in said insert.

79. Element (3,3a) according to any one of claims 63 to 78, comprising at least one deformation sensor (40) associated with at least one of said arms (33).

80. Element (3,3a) according to claim 79, wherein said at least one deformation sensor (40) is a strain gauge.

81. Element (3,3a) according to claim 79 or 80, comprising four deformation sensors (40), each of which is associated with a respective arm (33).

82. Element (3,3a) according to claim 81, wherein said sensors (40) are connected as a Wheatstone bridge.

83. Element (3,3a) according to any one of claims 63 to 82, comprising at least one electronic device housed in at least one area (33a) defined between two adjacent arms (33).

84. Element (3,3a) according to any one of claims 63 to 83, comprising a pair of covers (70,71) adapted to couple with said element (3,3a) for transferring torque on axially opposite sides at said second annular element (32).

85. Element (3,3a) according to claim 84, wherein at least one of said covers (70,71) is a solar panel.

86. Bottom bracket assembly (100) for a bicycle, comprising a crank arm assembly (1) according to any one of claims 1 to 43.

87. Bicycle comprising a crank arm assembly (1) according to any one of claims 1 to 43.
